# EUROPÄISCHE PATENTSCHRIFT

(11) **EP 2 531 366 B1**
(45) Veröffentlichungstag und Bekanntmachung des Hinweises auf die Patenterteilung: **04.03.2020**
(21) Anmeldenummer: 11705171.4
(22) Anmeldetag: 31.01.2011
(51) Int. Cl.: B63H 21/17, B63H 23/24, B63J 3/02, B63H 11/04, B63H 11/00, B60L 3/00, B60L 50/13

(54) **SCHIFFSANTRIEBSSYSTEM MIT MEHREREN ELEKTRISCHEN ANTRIEBSWELLEN**
SHIP DRIVE SYSTEM HAVING A PLURALITY OF ELECTRIC DRIVE SHAFTS
SYSTÈME DE PROPULSION DE BATEAU COMPRENANT PLUSIEURS ARBRES D'ENTRAÎNEMENT ÉLECTRIQUES

(30) Priorität: 01.02.2010 DE 102010006599
(43) Veröffentlichungstag der Anmeldung: 12.12.2012
(73) Patentinhaber: Siemens Aktiengesellschaft, 80333 München (DE)
(72) Erfinder: HARTIG, Rainer, 21614 Buxtehude (DE); TIGGES, Kay, 21698 Harsefeld (DE); WYCISK, Michael, 24248 Mönkeberg (DE)
(86) Internationale Anmeldenummer: PCT/EP2011/051323
(87) Internationale Veröffentlichungsnummer: WO 2011/092330

(56) Entgegenhaltungen:
- DE-A1- 3 310 506
- GB-A- 190 925 734
- FRAUENHOFER J ET AL: "SIEMENS ENTWICKLUNG EINES HOCHTEMPERATURSUPRALEITENDEN SCHIFFSGENERATORS", SCHIFF UND HAFEN, SEEHAFEN VERLAG GMBH, DE, Bd. 56, Nr. 7, 1. Juli 2004 (2004-07-01), Seiten 52-56, XP001209681, ISSN: 1436-8498
- WESSKALLNIES B: "EIN SCHIFFSANTRIEB MIT EINEM SUPRALEITENDEN FAHRMOTOR", JAHRBUCH DER SCHIFFBAUTECHNISCHEN GESELLSCHAFT, BERLIN, DE, Bd. 83, 1. Januar 1990 (1990-01-01), Seiten 375-382, XP002194070, ISSN: 0374-1222
- FRAUENHOFER J ET AL: "SIEMENS ENTWICKLUNG EINES HOCHTEMPERATURSUPRALEITENDEN SCHIFFSGENERATORS", SCHIFF UND HAFEN, SEEHAFEN VERLAG GMBH, DE, vol. 56, no. 7, 1 July 2004 (2004-07-01), pages 52-56, XP001209681, ISSN: 1436-8498
- WESSKALLNIES B: "EIN SCHIFFSANTRIEB MIT EINEM SUPRALEITENDEN FAHRMOTOR", JAHRBUCH DER SCHIFFBAUTECHNISCHEN GESELLSCHAFT, BERLIN, DE, vol. 83, 1 January 1990 (1990-01-01), pages 375-382, XP002194070, ISSN: 0374-1222

## Beschreibung

Die Erfindung betrifft ein Schiffsantriebssystem mit mehreren elektrischen Antriebswellen gemäß Patentanspruch 1 sowie eine vorteilhafte Verwendung eines derartigen Schiffsantriebssystem gemäß Patentanspruch 13 und ein Verfahren zum Betrieb eines Schiffsantriebssystems gemäß Anspruch 14.

Elektrische Antriebsanlagen auf Schiffen (z.B. auf vollelektrischen Schiffen) umfassen üblicherweise einen oder mehrere elektrische Antriebsmotoren zum Antrieb jeweils einer Vortriebseinheit (z.B. eines Propellers), die über jeweils einen Umrichter aus einem elektrischen Netz des Schiffes (häufig auch als "Fahrnetz" bezeichnet) gespeist werden. Das elektrische Netz wird wiederum von einem oder mehreren Dieselgeneratoren gespeist. Das elektrische Netz hat dabei eine Spannung fest vorgegebener Amplitude und Frequenz, z.B. eine Mittelspannung mit einer Nennspannung von 6.6 kV bei einer Nennfrequenz von 60 Hz. Gegebenenfalls ist zwischen den Umrichter und das Netz noch ein Transformator geschaltet. Die Umrichter wandeln die (ggf. heruntertransformierte) Netzspannung in eine für den Betrieb der Antriebsmotoren benötigte Spannung mit von der Netzspannung unterschiedlicher Amplitude und Frequenz um.

Niederspannungsverbraucher an Bord eines Schiffes (z.B. Navigations- und Steuergeräte, Lautsprecheranlage, Beleuchtung) werden durch ein separates Bordnetz versorgt, das üblicherweise eine Nennspannung von 400 V bei einer Nennfrequenz von 50 Hz oder 440V bei 60 Hz hat. Das Bordnetz kann unabhängig von dem Fahrnetz von eigenen Bordnetzgeneratoren mit elektrischer Energie gespeist werden. Alternativ kann das Bordnetz über einen Bordnetzumrichter und ggf. einen Transformator aus dem Fahrnetz versorgt werden. Der Bordnetzumrichter und ggf. der Transformator wandelt die Spannung des Fahrnetzes in eine Spannung mit der Amplitude und Frequenz des Bordnetzes um.

Ein großer Vorteil dieser Lösung ist, dass durch den Umrichter Rückwirkungen auf das Fahrnetz aufgrund von Laststößen (z.B. wenn ein Propeller bei schwerer See aus dem Wasser auf- und wieder eintaucht) vermieden werden können, wenn dieser entsprechend groß dimensioniert ist. Neben vielen anderen Vorteilen haben diese Antriebskonzepte aber den Nachteil, dass sie eine größere Zahl Umrichter zur Spannungsumwandlung im Fahrnetz mit entsprechendem Platzbedarf und Kosten benötigen.

Eine weitere bekannte elektrische Antriebslösung, die ohne derartige Umrichter auskommt, besteht darin, die Generatoren und die Antriebsmotoren ohne zwischengeschaltete Umrichter miteinander zu koppeln. Bei einer derartigen Antriebslösung werden ein oder mehrere drehzahlveränderbare Antriebsmotoren ohne zwischengeschalteten Umrichter direkt mit der von einem oder mehreren drehzahlveränderbaren Generatoren erzeugten Spannung variabler Amplitude und variabler Frequenz betrieben.

Die Steuerung und/oder Regelung der Motoren und somit der Vortriebseinheiten erfolgt somit indirekt durch eine Steuerung und/oder Regelung der Verbrennungskraftmaschinen zum Antrieb der Generatoren. Die Antriebsmotoren sind dabei elektrisch fest mit den Generatoren gekoppelt, d.h. eine Drehbewegung der Generatoren bewirkt eine entsprechend proportionale Drehbewegung der elektrischen Antriebsmotoren. Es wird somit die Funktion einer mechanischen Welle mit Hilfe von elektrischen Maschinen nachgebildet. Eine derartige Antriebslösung wird häufig als eine "elektrische Welle" bezeichnet.

Es ist dabei auch bekannt, aus der elektrischen Welle über einen Bordnetzumrichter und ggf. einen Transformator elektrische Energie auszukoppeln, d.h. ein Bordnetzumrichter und ggf. ein Transformator wandelt die von dem (den) Generator(en) erzeugte Spannung variabler Amplitude und variabler Frequenz in eine Spannung mit konstanter Amplitude und konstanter Frequenz für ein Bordnetz um.

Mehrhüllen-Schiffe wie z.B. Katamarane oder Trimarane mit Geschwindigkeiten von über 40 Knoten eignen sich besonders für Express-Fähren und Navy-Anwendungen, bei denen es auf hohe Geschwindigkeiten ankommt. Sie erfreuen sich deshalb zunehmender Beliebtheit. Diese Schiffe weisen für den Vortrieb beispielsweise Waterjets auf, die mechanisch direkt mit Dieselmotoren oder Gasturbinen gekoppelt sind und von diesen angetrieben sind. Durch den mechanischen Direktantrieb kommt es allerdings zu Einschränkungen im Schiffsentwurf, die ein optimales schiffbauliches Design des Schiffes (u.a. unter den Aspekten der Hydrodynamik und Funktionalität) verhindern. Aus der GB 25 734 ist ein Schiff mit vier elektrischen Antriebswellen bekannt.

Aus der DE 33 10 506 ist eine Anordnung zur kontinuierlichen Bordnetzversorgung aus einem Fahrnetz bei Drehstrom-Schiffsantrieben mit variabler Frequenz und Teilumrichter bekannt.

Es ist deshalb Aufgabe vorliegender Erfindung, ein - insbesondere für Hochgeschwindigkeits-Mehrhüllen-Schiffe geeignetes - Schiffsantriebssystem anzugeben, das sich durch eine hohe Ausfallsicherheit und Energieeffizienz auszeichnet und einen optimalen Schiffsentwurf ermöglicht.

Die Lösung dieser Aufgabe gelingt durch ein Schiffsantriebssystem gemäß Patentanspruch 1. Vorteilhafte Ausgestaltungen dieses Schiffsantriebssystem sind Gegenstand der Patentansprüche 2 bis 12. Eine besonders vorteilhafte Verwendung des Schiffsantriebssystems ist Gegenstand des Patentanspruchs 13. Eine weitere Lösung der Aufgabe gelingt durch ein Verfahren zum Betrieb eines Schiffsantriebssystem gemäß Patentanspruch 14. Vorteilhafte Ausgestaltungen dieses Schiffsantriebssystems sind Gegenstand der Patentansprüche 15 bis 25.

Ein erfindungsgemäßes Schiffsantriebssystem umfasst zumindest eine erste und eine zweite elektrische Antriebswelle zum Antrieb jeweils einer Vortriebseinheit, insbesondere eines Waterjets, wobei jede der elektrischen Antriebswellen zumindest einen von einer Verbrennungskraftmaschine angetriebenen drehzahlveränderbaren Generator zur Erzeugung einer Motorspannung mit variabler Amplitude und variabler Frequenz und zumindest einen mit dieser Motorspannung versorgten und mit einer Vortriebseinheit gekoppelten drehzahlveränderbaren Antriebsmotor umfasst. Die erste und die zweite Antriebswelle sind dabei von einem ersten Betriebszustand, in dem sie elektrisch voneinander getrennt sind, in einen zweiten Betriebszustand schaltbar, in dem sie elektrisch derart miteinander gekoppelt sind, dass eine Energieübergabe von dem zumindest einen Generator der einen Antriebswelle zu dem zumindest einen Antriebsmotor der anderen Antriebswelle erfolgen kann.

Durch die Verwendung elektrischer Antriebswellen ergibt sich im Vergleich zu mechanischen Direktantrieben eine wesentlich größere Gestaltungsfreiheit im Schiffsentwurf, da die Verbrennungskraftmaschinen nicht in der Nähe der Vortriebseinheiten, sondern getrennt davon an einem anderen Ort im Schiff angeordnet werden können. Auch im Vergleich zu umrichtergespeisten dieselelektrischen Antrieben ergeben sich Vorteile, da durch den Wegfall der Umrichter Platz und Gewicht eingespart werden, was insbesondere in Hochgeschwindigkeits-Mehrhüllenschiffen wie z.B. Katamaranen und Trimaranen von Bedeutung ist. Durch die Möglichkeit, in dem zweiten Betriebszustand elektrische Energie von einer Antriebswelle auf die andere zu übergeben, kann bei Ausfall der Energieerzeugung in einer der Antriebswellen die Energie durch den zumindest einen Generator der anderen Antriebswelle geliefert werden. Hierdurch kann eine hohe Standfestigkeit des Schiffes erzielt werden, was insbesondere für Navy-Schiffe wichtig ist. Außerdem kann der Gesamtenergieverbrauch des Schiffsantriebssystems optimiert werden, da beispielsweise im niedrigen Geschwindigkeitsbereich, bei dem die Verbrennungskraftmaschinen mit relativ schlechtem Wirkungsgrad arbeiten, gezielt die Energieerzeugung einer Antriebswelle abgeschaltet und die für den Betrieb ihrer Antriebsmotoren benötigte elektrische Energie von einem oder mehreren Generatoren der anderen Antriebswelle erzeugt und übergeben werden.

Erfindungsgemäß umfasst das Schiffsantriebssystem noch eine dritte elektrische Antriebswelle zum Antrieb einer weiteren Vortriebseinheit, insbesondere eines Waterjets, wobei die dritte Antriebswelle zumindest einen von einer Verbrennungskraftmaschine angetriebenen drehzahlveränderbaren Generator zur Erzeugung einer Motorspannung mit variabler Amplitude und variabler Frequenz und zumindest einem mit dieser Motorspannung versorgten und mit der weiteren Vortriebseinheit gekoppelten drehzahlveränderbaren Antriebsmotor umfasst, und wobei die erste und die dritte Antriebswelle von einem ersten Betriebszustand, in dem sie elektrisch voneinander getrennt sind, in einen zweiten Betriebszustand schaltbar sind, in dem sie elektrisch derart miteinander gekoppelt sind, dass eine Energieübergabe von dem zumindest einen Generator der einen Antriebswelle zu dem zumindest einen Antriebsmotor der anderen Antriebswelle erfolgen kann. Hierdurch können die Vortriebskraft (und somit beispielsweise die Höchstgeschwindigkeit des Schiffes), die Ausfallsicherheit und die Energieeffizienz noch weiter erhöht werden.

Bevorzugt weist der zumindest eine Generator eine Supraleiter-Wicklung, insbesondere eine Hoch-Temperatur-Supraleiter (HTS)- Wicklung, auf. Bei der Supraleiter-Wicklung kann es sich um eine Ständerwicklung oder um eine rotierende Läuferwicklung des Generators handeln. Generatoren in Supraleitertechnik weisen im Vergleich zu konventionellen Maschinen eine größere Leistungsdichte (d.h. Leistung bezogen auf das Bauvolumen) auf. Hierdurch sind noch weitergehende Optimierungen im Schiffsentwurf möglich. Durch das vergleichsweise geringere Gewicht können bei gleichbleibender Antriebsleitung die Höchstgeschwindigkeit und/oder die Nutzlast des Schiffes erhöht werden. Ein Generator mit einer Supraleiter-Wicklung weist zudem üblicherweise einen im Vergleich zu einem konventionellen Generator ohne Supraleiter-Wicklung wesentlich größeren magnetischen Luftspalt zwischen Läufer und Ständer auf. Dies liegt vor allem daran, dass der Supraleiter durch einen Vakuumkryostaten oder eine ähnliche Kühleinrichtung gekühlt wird, dessen bzw. deren Wandung im Luftspalt verläuft. Der relativ große magnetische Luftspalt bewirkt, dass der Generator eine wesentlich geringere synchrone Reaktanz als ein konventioneller Generator aufweist. Dies führt dazu, dass bei gleicher elektrischer Leistung ein HTS-Generator im Vergleich zu einem herkömmlichen Generator eine deutlich steifere Strom-Spannungs-Kennlinie aufweist. Hierdurch kommt es bei Lastaufschaltungen oder -stoßen zu keinem Einbruch der von dem Generator erzeugten Spannung. Spannungs- und Frequenzschwankungen in der elektrischen Welle können hierdurch reduziert werden. Damit wird keine aufwändige Regelung für die elektrische Welle zur Stabilisierung der Spannung der Antriebswelle und der Drehzahl der Antriebsmotoren bzw. der Vortriebseinheit benötigt.

Wenn auch der zumindest eine Antriebsmotor eine Supraleiter-Wicklung, insbesondere eine Hoch-Temperatur-Supraleiter (HTS)- Wicklung, aufweist, kann er bei geringer Baugröße sehr leistungs- und drehmomentstark ausgebildet werden, was insbesondere für Hochgeschwindigkeits-Schiffe wie z.B. Katamarane und Trimarane bedeutsam ist.

Vorzugsweise ist die Supraleiter-Wicklung eine rotierende Läuferwicklung, da bei dieser die zu kühlende Oberfläche kleiner als bei einer Supraleiter-Ständerwicklung gehalten werden kann.

Die Kopplung der Antriebswellen kann besonders verlustarm durch eine elektrische Leitungsverbindung erfolgen, die vorzugsweise einen Supraleiter, insbesondere einen Hoch-Temperatur-Supraleiter (HTS) umfasst.

Gemäß einer besonders vorteilhaften Ausgestaltung dienen die zweite und die dritte Antriebswelle als Hauptantrieb für einen unteren Geschwindigkeitsbereich des Schiffes (z.B. von Null bis 30 Knoten) und die erste Antriebswelle alleine oder im Verbund mit der zweiten und der dritten Antriebswelle als Hauptantrieb für einen höheren Geschwindigkeitsbereich bis zur Höchstgeschwindigkeit (z.B. bis 45 Knoten) des Schiffes.

Die Verbrennungskraftmaschine der ersten Antriebswelle ist dabei von Vorteil als eine Gasturbine und die Verbrennungskraftmaschinen der zweiten und der dritten Antriebswelle sind von Vorteil als Dieselmotoren ausgebildet.

Das Schiffsantriebssystem umfasst bevorzugt einen mit der Motorspannung mit variabler Amplitude und variabler Frequenz einer der Antriebswellen versorgten Bordnetzumrichter, der diese Motorspannung in eine Spannung mit konstanter Amplitude und konstanter Frequenz für ein Bordnetz umwandelt. Besondere Vorteile ergeben sich dabei, wenn der zumindest eine Generator der Antriebswelle eine Supraleiter-Wicklung aufweist und sich somit die Antriebswelle durch eine besondere Steifigkeit auszeichnet. Durch die Vermeidung von Spannungs- und Frequenzschwankungen auf der elektrischen Welle aufgrund der Steifigkeit der Kennlinie des Generators bzw. der Generatoren können dann auch unzulässige Schwankungen in der von dem Bordnetz-Umrichter erzeugten Spannung und somit Sicherheitsabschaltungen des Bordnetz-Umrichters oder eine Überdimensionierung des Bordnetz-Umrichters vermieden werden.

Zur weiteren Erhöhung der Ausfallsicherheit umfasst das Schiffsantriebssystem erfindungsgemäß auch einen mit der Motorspannung mit variabler Amplitude und variabler Frequenz der zweiten Antriebswelle versorgten ersten Bordnetzumrichter, der diese Spannung in eine Spannung mit konstanter Amplitude und konstanter Frequenz für ein erstes Teilbordnetz umwandelt, und einen mit der Motorspannung mit variabler Amplitude und variabler Frequenz der dritten Antriebswelle versorgten zweiten Bordnetzumrichter, der diese Spannung in eine Spannung mit konstanter Amplitude und konstanter Frequenz für ein zweites Teilbordnetz umwandelt, umfassen.

Die Ausfallsicherheit wird dabei erfindungsgemäß noch dadurch erhöht, dass die die beiden Teilbordnetze miteinander koppelbar sind. Gemäß einer weiteren vorteilhaften Ausgestaltung umfasst das Schiffsantriebssystem zumindest einen zusätzlichen Bordnetzgenerator zur Versorgung des Bordnetzes oder eines Teilbordnetzes mit einer Spannung mit konstanter Amplitude und konstanter Frequenz. Hierdurch kann die Spannungsversorgung des Bordnetzes sichergestellt werden, auch wenn die elektrische Antriebswelle abgeschaltet ist (z.B. im Hafen) oder wenn die gesamte Generatorenleistung der Antriebswelle für Antriebszwecke benötigt wird.

Wenn der zumindest eine Generator der Antriebswelle von der ihn antreibenden Verbrennungskraftmaschine wahlweise mit einer festen oder mit einer variablen Frequenz antreibbar ist, ergeben sich weitere Einsatzmöglichkeiten dieser Komponenten. Beispielsweise kann der zumindest eine Generator zur Hafenstromversorgung anderer Schiffe verwendet werden.

Gemäß einer besonders vorteilhaften Ausgestaltung ist die Antriebswelle von einem Betriebszustand, bei dem der zumindest eine Generator der Antriebswelle ohne eine Zwischenschaltung eines Bordnetzumrichters elektrisch mit dem zumindest einen Antriebsmotor der Antriebswelle gekoppelt ist und eine Spannung variabler Amplitude und Frequenz erzeugt, in einen Betriebszustand schaltbar, bei dem der zumindest eine Generator der Antriebswelle über einen Bordnetzumrichter mit dem zumindest einen Antriebsmotor der Antriebswelle elektrisch gekoppelt ist, wobei der Bordnetzumrichter eine Spannung variabler Amplitude und Frequenz erzeugt.

Von dem in einem Normalbetrieb vorliegenden ersten Betriebszustand kann dann für kleine Drehzahlanforderungen an die Verbrennungskraftmaschine zum Antrieb des Generators, insbesondere für Drehzahlanforderungen, die unter einer Mindestdrehzahlanforderung der Verbrennungskraftmaschine liegen, in den zweiten Betriebszustand gewechselt werden, bei dem der Bordnetzumrichter in die elektrische Antriebswelle, d.h. in die elektrische Verbindung zwischen dem zumindest einen Generator und dem zumindest einen Antriebsmotor der Antriebswelle, geschaltet ist. Mittels des Bordnetzumrichters und ggf. eines oder mehrerer Transformatoren kann dann der Antriebsmotor mit einer Spannung gespeist werden, die eine niedrigere Frequenz als die von dem Generator erzeugte Spannung aufweist. Der Antriebsmotor kann dann auch bei niedrigen Drehzahlen mit einem relativ hohen Drehmoment die Vortriebseinheit antreiben. Hierdurch ist für niedrige Drehzahlen kein Verstellpropeller notwendig, sondern es kann ein Festpropeller zum Einsatz kommen.

Alternativ und/oder ergänzend kann die Antriebswelle von einem Betriebszustand, bei dem der zumindest eine Generator der Antriebswelle ohne eine Zwischenschaltung des Bordnetzumrichters elektrisch mit dem zumindest einen Antriebsmotor der Antriebswelle gekoppelt ist und eine Spannung variabler Amplitude und Frequenz erzeugt, in einen Betriebszustand schaltbar sein, bei dem das Bordnetz oder Teilbordnetz über den Bordnetzumrichter mit dem zumindest einen Antriebsmotor der Antriebswelle elektrisch gekoppelt ist, wobei der Bordnetzumrichter eine Spannung variabler Amplitude und Frequenz erzeugt. Hierdurch kann der Antriebsmotor ebenfalls bei niedrigen Drehzahlen mit einem relativ hohen Drehmoment die Vortriebseinheit antreiben. Außerdem kann der Antriebsmotor bei einem Ausfall der Generatoren der elektrischen Welle aus dem Bordnetz versorgt werden.

Die Erfindung eignet sich aufgrund der vorstehen erwähnten Vorteile besonders zur Verwendung in einem Mehrhüllen-Schiff, insbesondere in einem Katamaran oder einem Trimaran.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert; darin zeigen:
- FIG 1: ein erstes Ausführungsbeispiel eines erfindungsgemäßen Schiffsantriebssystems,
- FIG 2: eine Strom-Spannungskennlinie eines HTS-Generators bei einer Lastaufschaltung,
- FIG 3: ein zweites Ausführungsbeispiel eines erfindungsgemäßen Schiffsantriebssystem in einem ersten Betriebszustand,
- FIG 4: das Ausführungsbeispiel von FIG 3 in einem ersten Sonderbetriebszustand und
- FIG 5: das Ausführungsbeispiel von FIG 3 in einem zweiten Sonderbetriebszustand.

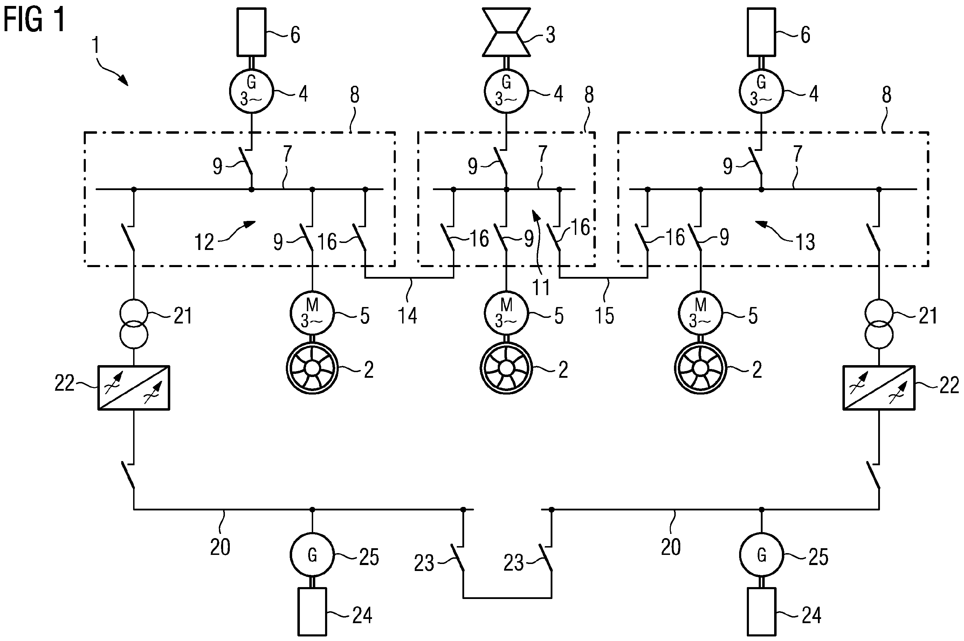

Ein in FIG 1 gezeigtes erfindungsgemäßes Schiffsantriebssystem 1 umfasst drei elektrische Antriebswellen 11, 12, 13 zum Antrieb jeweils einer Vortriebseinheit in Form eines Waterjets (Wasserstrahlantriebs) 2.

Die erste Antriebswelle 11 umfasst einen von einer Gasturbine 3 angetriebenen drehzahlveränderbaren Generator 4 zur Erzeugung einer Motorspannung mit variabler Amplitude und variabler Frequenz und einen mit dieser Motorspannung versorgten und mit einem Waterjet 2 gekoppelten drehzahlveränderbaren Antriebsmotor 5.

Die zweite und die dritte Antriebswelle 12, 13 umfassen jeweils einen von einem Dieselmotor 6 angetriebenen drehzahlveränderbaren Generator 4 zur Erzeugung einer Motorspannung mit variabler Amplitude und variabler Frequenz und einen mit dieser Motorspannung versorgten und mit einem Waterjet 2 gekoppelten drehzahlveränderbaren Antriebsmotor 5.

Bei den Antriebswellen 11, 12, 13 sind jeweils ein Generator 4 und ein Antriebsmotor 5 über einen Sammelleiter 7 miteinander elektrisch verbunden. Der Anschluss der Generatoren 4 und der Antriebsmotoren 5 an den Sammelleiter 7 erfolgt dabei über jeweils einen Schalter 9. Der Sammelleiter 7 und die Schalter 9 sind ein Bestandteil einer Schaltanlage 8. Der Sammelleiter 7 der ersten Antriebswelle 11 ist dabei über eine Leitungsverbindung 14 mit dem Sammelleiter 7 der zweiten Antriebswelle 12 und über eine Leitungsverbindung 15 mit dem Sammelleiter 7 der dritten Antriebswelle 13 verbindbar. Der Anschluss der Leitungsverbindungen 14, 15 an die Sammelleiter 7 erfolgt dabei über jeweils einen Schalter 16.

Über die Leitungsverbindungen 14, 15 und die Schalter 16 ist die erste Antriebswelle 11 wahlweise mit der zweiten und/oder der dritten Antriebswelle 12, 13 koppelbar.

Zwischen einem Generator 4 und der bzw. dem ihn antreibenden Gasturbine 3 bzw. Dieselmotor 6 sowie zwischen dem Waterjet 2 und dem ihn antreibenden Antriebsmotor 5 kann zusätzlich noch ein mechanisches Getriebe geschaltet sein. Außerdem können die Antriebswellen 11, 12, 13 statt nur jeweils eines einzigen Generators 4 und Antriebsmotors 5 auch mehrere Generatoren und/oder Antriebsmotoren umfassen.

Mit der von den Generatoren 4 der elektrischen Antriebswellen 12, 13 erzeugten Spannung variabler Amplitude und variabler Frequenz wird über einen Transformator 21 zusätzlich jeweils ein Bordnetz-Umrichter 22 betrieben, der diese variable Spannung in eine Spannung mit konstanter Amplitude und konstanter Frequenz für jeweils ein Teilbordnetz 20 umwandelt. Aus dem Teilbordnetz 20 werden nicht näher dargestellte Niederspannungsverbraucher des Schiffes (z.B. Navigations- und Steuergeräte, Lautsprecheranlage, Beleuchtung) versorgt. Das Teilbordnetz 20 hat üblicherweise eine Nennspannung von 400V bei einer Nennfrequenz von 50 Hz oder 440V bei 60 Hz. Die beiden Teilbordnetze 20 sind über Schalter 23 miteinander koppelbar, so dass die Versorgung beider Teilbordnetze 20 auch bei Ausfall oder Abschaltung einer der beiden Antriebswellen 12, 13 möglich ist.

Jeweils ein von einer Verbrennungskraftmaschine 24 angetriebener zusätzlicher Hafengenerator 25 dient, vorzugsweise über einen nicht näher dargestellten nachgeschalteten Umrichter, zur Versorgung jeweils eines Teilbordnetzes 20 oder der miteinander gekoppelten Teilbordnetze 20 mit einer Spannung mit konstanter Amplitude und konstanter Frequenz bei abgeschalteten elektrischen Wellen 12, 13, beispielsweise wenn sich das Schiff im Hafen befindet und keine Antriebsleistung benötigt oder wenn die gesamte Leistung der Generatoren 4 für den Antrieb benötigt wird. Ergänzend und/oder alternativ können die Teilbordnetze 20 statt durch den Hafengenerator 25 auch durch eine Batterie oder durch Brennstoffzellen gespeist werden.

Im Normalbetrieb befindet sich das Schiffsantriebssystem 1 in einem ersten Betriebszustand, bei dem die Schalter 9 geschlossen und die Schalter 16 geöffnet sind.

Die Antriebsmotoren 5 werden ohne einen zwischengeschalteten Umrichter mit der von dem jeweiligen Generator 4 erzeugten Spannung mit variabler Amplitude und variabler Frequenz betrieben. Die Steuerung und/oder Regelung der Drehzahl der Antriebsmotoren 5 und somit der Waterjets 2 erfolgt somit indirekt durch die Steuerung und/oder Regelung der Gasturbine 3 bzw. der Dieselmotoren 6 zum Antrieb der Generatoren 4. Eine Drehbewegung der Gasturbine 3 bzw. der Dieselmotoren 6 und folglich der Generatoren 4 bewirkt somit eine entsprechend proportionale Drehbewegung der Motoren 5. Es wird somit die Funktion einer mechanischen Welle mit Hilfe von elektrischen Maschinen nachgebildet.

Die zweite und die dritte Antriebswelle 12, 13 dienen dabei als Hauptantrieb für einen unteren Geschwindigkeitsbereich des Schiffes (z.B. bis 30 Knoten) und die erste Antriebswelle 11 alleine oder im Verbund mit der zweiten und der dritte Antriebswelle dient als Hauptantrieb für einen höheren Geschwindigkeitsbereich bis zur Höchstgeschwindigkeit (z.B. 45 Knoten) des Schiffes. Die Leistung der Dieselmotoren beträgt beispielsweise 1 MW bis 20 MW, insbesondere 10 MW und die der Gasturbine 5 MW bis 30 MW, insbesondere 20 MW.

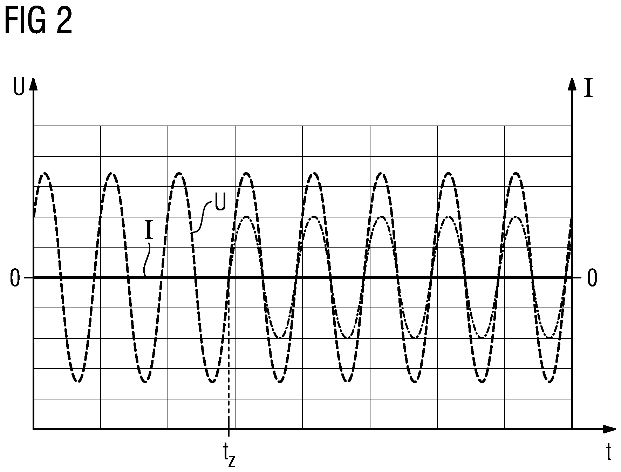

Die Generatoren 4 sind dabei als Synchronmaschinen mit einer rotierenden HTS-Feldwicklung (d.h. einer HTS-Wicklung im Läufer) ausgebildet. Derartige Maschinen weisen eine geringe synchrone Reaktanz und deshalb große Steifigkeit in ihrer Strom-Spannungs-Kennlinie auf. Beispielhaft zeigt hierzu FIG 2 die Kennlinie eines Synchrongenerators mit einer rotierenden HTS-Feldwicklung und einer Leistung von 400kW für den Fall einer Voll-Lastaufschaltung von Null auf 380kW. Eine derartige Maschine weist beispielsweise eine synchrone Längsreaktanz x_{d} = 0,15 auf. Wie aus dem Verlauf der Stromkurve I und der Spannungskurve U ersichtlich ist, kommt es beim Zuschalten der Last zum Zeitpunkt t_{z} zu keinen Einbrüchen der Spannung U. Dies zeigt das äußerst stabile Betriebsverhalten einer derartigen Maschine auch unter extremen Lastschwankungen.

Für die Bordnetz-Umrichter 22 sind somit bei Laststößen auf Seite der Waterjets (wie sie z.B. bei schwerer See verursacht werden können) keine Rückwirkungen auf ihre Eingangsspannung spürbar. Die Bordnetz-Umrichter 22 können somit mit wesentlich geringeren dynamischen Reserven ausgestattet werden als bei der Verwendung konventioneller Synchronmaschinen ohne HTS-Wicklung als Generatoren in den Antriebswellen 11, 12, 13. Außerdem kann in den Antriebswellen 11, 12, 13 auf eine aufwendige Regelung zur Stabilisierung der Drehzahl (bzw. Spannung und Frequenz) des jeweiligen Antriebsmotors 5 bzw. Waterjets 3 verzichtet werden.

Von Vorteil sind auch die Antriebsmotoren 5 als leistungs- und drehmomentstarke Synchronmaschinen mit einer rotierenden HTS-Feldwicklung (d.h. einer HTS-Wicklung im Läufer) ausgebildet.

Durch Schließen der Schalter 16 sind für besondere Betriebssituationen die erste Antriebswelle 11 und die zweite Antriebswelle 12 sowie die erste Antriebswelle 11 und die dritte Antriebswelle 13 von einem ersten Betriebszustand, in dem sie elektrisch voneinander getrennt sind, in einen zweiten Betriebszustand schaltbar, in dem sie elektrisch derart miteinander gekoppelt sind, dass eine Energieübergabe von dem Generator 4 der einen Antriebswelle zu dem Antriebsmotor 5 der anderen Antriebswelle erfolgen kann. Über den Sammelleiter 7 der ersten Antriebswelle 11 ist zudem auch eine Energieübergabe zwischen der zweiten und der dritten Antriebswelle 12, 13 möglich.

Hierdurch ist zum einen eine Energieversorgung einer Antriebswelle auch bei einem Ausfall ihrer Energieerzeuger (d.h. Gasturbine 3 oder Dieselmotor 6) möglich, wodurch insbesondere bei Navy-Schiffen die Standfestigkeit deutlich erhöht werden kann. Zum anderen kann die Energieerzeugung bedarfsgerecht mit gerade so vielen Energieerzeugern erfolgen, dass diese in einem Betriebspunkt mit einem guten Wirkungsgrad arbeiten.

Durch eine Synchronisierung der Amplitude, Frequenz und Phase der von den Generatoren 4 erzeugten Spannung kann ein Antriebsmotor 5 auch gleichzeitig von Generatoren 4 unterschiedlicher Antriebswellen gespeist werden.

Durch die Steifigkeit der Strom-Spannungskennlinien der Antriebswellen 11, 12, 13 kann auch im zweiten Betriebszustand des Schiffantriebssystems auf eine aufwendige Regelung zur Stabilisierung der Drehzahlen (bzw. Spannung und Frequenz) der Antriebsmotoren 5 bzw. Waterjets 3 und der Ausgangsspannung der Bordnetzumrichter 22 verzichtet werden.

Bevorzugt kommt das Schiffsantriebssystem 1 in einem Trimaran zur Anwendung. Dabei befinden sich die Antriebswellen 11, 12, 13 mit den Waterjets 3 im der mittleren Schiffshülle des Trimarans. Natürlich kann ein Schiff auch mehr als drei derartige Waterjets 3 mit entsprechender Anzahl elektrischer Antriebswellen aufweisen.

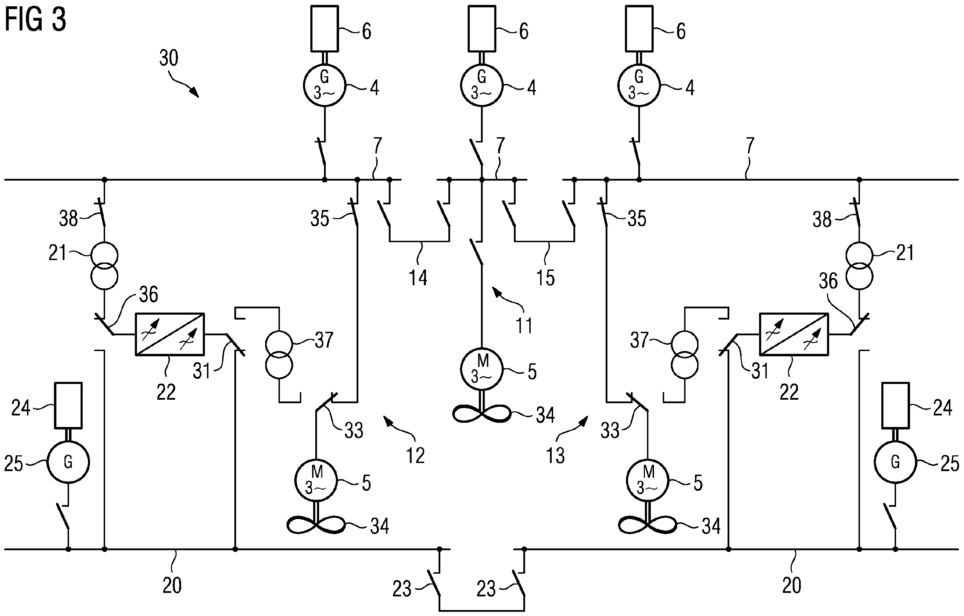

Ein in FIG 3 gezeigtes Schiffsantriebssystem 30 unterscheidet sich von dem in FIG 1 gezeigten Schiffsantriebssystem 1 zum einen dadurch, dass es Propeller 34 anstatt Waterjets als Vortriebseinheiten aufweist und dass die erste elektrische Antriebswelle 11 einen Dieselmotor 6 anstatt einer Gasturbine zum Antrieb des Generators 4 aufweist. Die Propeller 34 müssen bei relativ kleinen Drehzahlen und relativ kleiner Leistung betrieben werden können. Dort weisen die Dieselmotoren 6 einen relativ schlechten Wirkungsgrad auf. Das Fahrnetz mit den Sammelleitern 7 ist beispielsweise ein Mittelspannungsfahrnetz mit einer Spannung von 6.6 kV/60Hz und das Bordnetz 20 weist eine Spannung von 660V/60Hz auf.

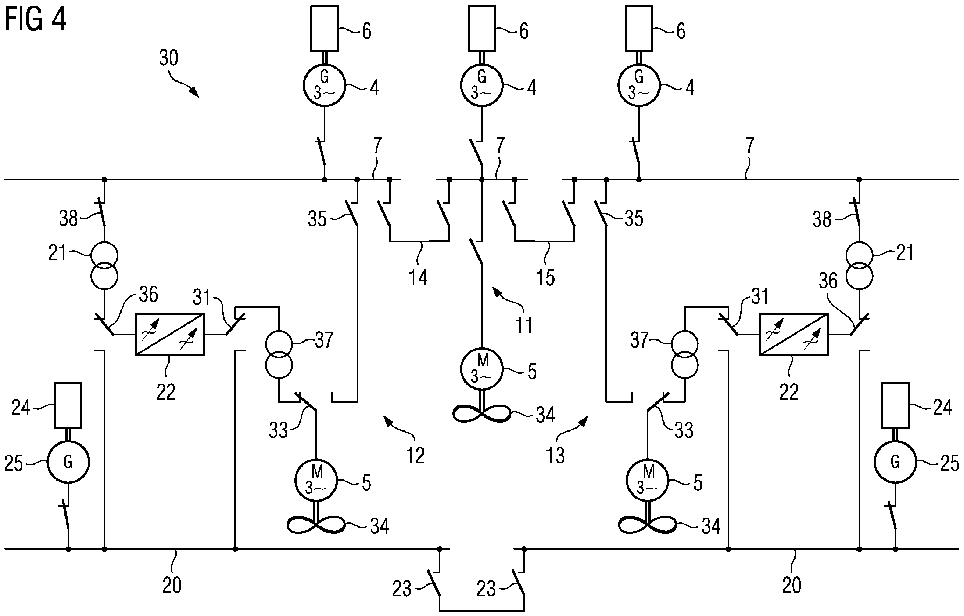

Das Schiffsantriebssystem 30 unterscheidet sich von dem in FIG 1 gezeigten Schiffsantriebssystem 1 zum anderen dadurch, dass die zweite und die dritte Antriebswelle 12, 13 von einem in FIG 3 gezeigten Normalbetriebszustand, bei dem die Antriebswellen 12, 13 über jeweils einen Transformator 21 und einen Bordnetzumrichter 22 elektrisch mit jeweils einem Teilbordnetz 20 gekoppelt sind und bei dem der Generator 4 der Antriebswelle 12, 13 ohne eine Zwischenschaltung des Bordnetzumrichters 22 elektrisch mit dem Antriebsmotor 5 der jeweiligen Antriebswelle 12, 13 gekoppelt ist, in einen in FIG 4 gezeigten ersten Sonderbetriebszustand schaltbar ist, bei dem der Generator 4 der Antriebswelle 12, 13 über den Transformator 21, den Bordnetzumrichter 22 und einen Transformator 37 mit dem Antriebsmotor 5 der jeweiligen Antriebswelle 12, 13 elektrisch gekoppelt ist.

Im Normalbetriebszustand werden die Generatoren 4 dann wie vorstehend beschrieben derart von den Dieselmotoren 6 angetrieben, dass sie eine Motorspannung mit variabler Amplitude und variabler Frequenz erzeugen. Mit dieser variablen Spannung wird zum einen der jeweilige Antriebsmotor 5 versorgt. Zum anderen wird diese variable Spannung über den jeweiligen Transformator 21 und den Bordnetzumrichter 22 dann in die Spannung konstanter Amplitude und Frequenz des Teilbordnetzes 20 umgewandelt.

Bei Drehzahlanforderungen an die Dieselmotoren 6 unterhalb ihrer Mindestdrehzahlanforderung kann das Schiffsantriebssystem 30 von dem Normalbetriebszustand in den ersten Sonderbetriebszustand umgeschaltet werden. Die Generatoren 4 werden dann von den Dieselmotoren 6 mit deren Mindestdrehzahl angetrieben, so dass sie eine Motorspannung mit konstanter Amplitude und Frequenzerzeugen. Diese Spannung wird über den jeweilig angeschlossenen Transformator 21, Bordnetzumrichter 22 und Transformator 37 in eine Spannung variabler Amplitude und Frequenz für die Versorgung des jeweiligen Antriebsmotors 5 umgewandelt, wobei die Frequenz der umgewandelten Spannung kleiner ist als die Frequenz der von dem Generator 4 erzeugten Spannung.

Der Bordnetzumrichter 22 ist hierzu ausgangsseitig über einen Schalter 31 entweder mit dem Teilbordnetz 20 oder über den Transformator 37 und einen Schalter 33 mit dem Antriebsmotor 5 verbindbar. Der Antriebsmotor 5 ist wiederum über den Schalter 33 entweder (über den Transformator 37 und den Schalter 31) mit dem Ausgang des Bordnetzumrichters 22 oder (über einen Schalter 35) mit dem Sammelleiter 7 der jeweiligen Antriebswelle 12, 13 verbindbar. Eingangsseitig ist der Bordnetzumrichter 22 über einen Schalter 36, den Transformator 21 und einen Schalter 38 mit dem Sammelleiter 7 der jeweiligen Antriebswelle 12, 13 verbindbar.

In dem in FIG 2 gezeigten ersten Sonderbetriebszustand können die Teilbordnetze 20 entweder von dem jeweiligen Hafengenerator 25 oder über einen nicht näher dargestellten zusätzlichen Bordnetzumrichter, der beispielsweise über den Transformator 21 und den Schalter 38 an den Sammelleiter 7 anschließbar ist, mit Strom versorgt werden.

Falls der Transformator 21 groß genug dimensioniert ist, kann alternativ ein Teilbordnetz 20 auch direkt über den Transformator 21 und den Schalter 38 an den Sammelleiter 7 anschließbar sein und somit ohne einen zwischengeschalteten Bordnetzumrichter direkt aus dem Sammelleiter 7 mit Strom versorgt werden. In diesem Fall ist dann auch ein Parallelbetrieb mit dem Bordnetzumrichter 22, über den der Antriebsmotor 5 mit Strom versorgt wird, möglich.

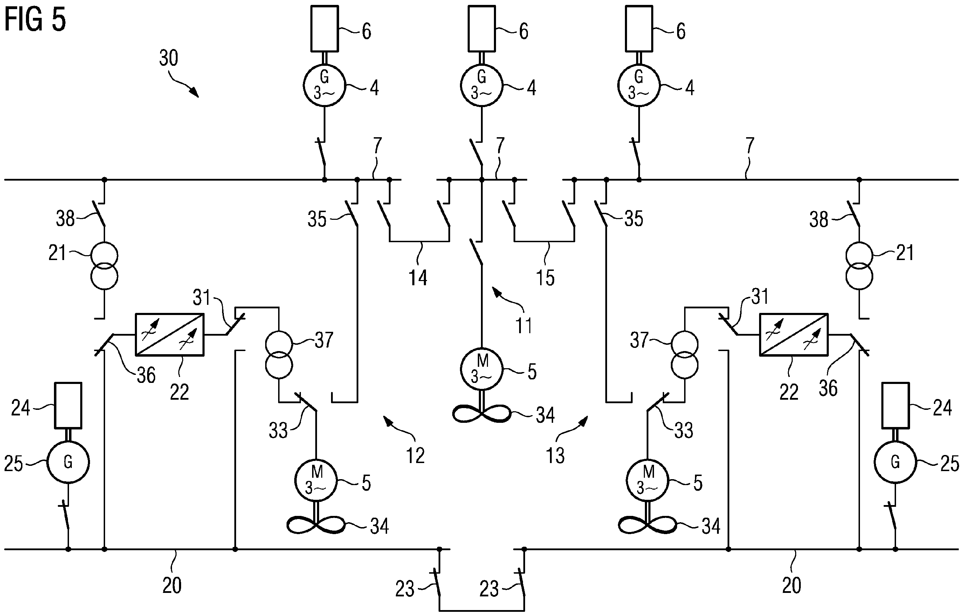

Bei einem in FIG 5 gezeigten zweiten Sonderbetriebszustand werden die Antriebsmotoren 5 über jeweils einen Bordnetzumrichter 22 aus einem Teilbordnetz 20 gespeist. Zur Stabilisierung der Teilbordnetze 20 sind diese von Vorteil über die Schalter 23 miteinander gekuppelt.

Die Bordnetzumrichter 22 sind hierzu eingangsseitig über den Schalter 36 entweder mit dem jeweiligen Sammelleiter 7 oder mit dem jeweiligen Teilbordnetz 20 verbindbar. Ausgangsseitig ist der Bordnetzumrichter 22 über den Schalter 31 entweder mit dem Teilbordnetz 20 oder über den Transformator 37 und den Schalter 33 mit dem Antriebsmotor 5 verbindbar.

Der Bordnetzumrichter 22 erhält eingangsseitig eine Spannung konstanter Amplitude und Frequenz und wandelt diese in eine Spannung variabler Amplitude und Frequenz für die Versorgung des jeweiligen Antriebsmotors 5 um.

Der zweite Sonderbetriebszustand kann zum einen genutzt werden, um die Antriebsmotoren 5 bei einem Ausfall der Generatoren 4 durch die Hafengeneratoren 25 mit Strom zu versorgen.

Der zweite Sonderbetriebszustand kann aber auch alternativ zu dem ersten Sonderbetriebszustand genutzt werden, um die Antriebsmotoren bei geringen Drehzahlen, die zu einer Drehzahlanforderungen an die Dieselmotoren 6 führen, die unterhalb deren Drehzahlmindestanforderungen liegen, mit Strom zu versorgen.

Wenn in diesem Fall der Bordnetzumrichter 22 eingangsseitig nicht aus dem (Teil-)Bordnetz 20, sondern von dem Generator 4 über den Sammelleiter 7 gespeist wird, erzeugt der Generator 4 eine Spannung konstanter Amplitude und Frequenz. Beispielsweise wird der den Generator 4 antreibende Dieselmotor 6 dann mit seiner Mindestdrehzahl betrieben. Der Bordnetzumrichter 22 wandelt dann die an seinem Eingang anliegende Spannung konstanter Amplitude und Frequenz dann in eine Spannung variabler Amplitude und Frequenz für die Versorgung des jeweiligen Antriebsmotors 5 um, wobei die Frequenz der umgewandelten Spannung kleiner ist als die Frequenz der von dem Generator 4 erzeugten Spannung.

Die Teilbordnetze 20 können in dem zweiten Sonderbetriebszustand entweder von den Hafengeneratoren 25 oder über einen nicht näher dargestellten zusätzlichen Bordnetzumrichter, der beispielsweise über den Transformator 21 und den Schalter 38 an den Sammelleiter 7 angeschlossen ist, mit Strom versorgt werden.

## Patentansprüche

1. Schiffsantriebssystem (1) mit zumindest einer ersten und einer zweiten elektrischen Antriebswelle (11, 12) zum Antrieb jeweils einer Vortriebseinheit (2), insbesondere eines Waterjets, wobei jede der elektrischen Antriebswellen (11, 12)
- zumindest einen von einer Verbrennungskraftmaschine (3, 6) angetriebenen drehzahlveränderbaren Generator (4) zur Erzeugung einer Motorspannung mit variabler Amplitude und variabler Frequenz und
- zumindest einen mit dieser Motorspannung versorgten und mit einer Vortriebseinheit (2) gekoppelten drehzahlveränderbaren Antriebsmotor (5) umfasst,
mit einem ersten Betriebszustand und einem zweiten Betriebszustand,
wobei im ersten Betriebszustand die erste und die zweite Antriebswelle (11, 12) elektrisch voneinander getrennt sind,
wobei im zweiten Betriebszustand die erste und die zweite Antriebswelle (11, 12) elektrisch miteinander gekoppelt sind,
wobei die erste und die zweite Antriebswelle (11, 12) vom ersten Betriebszustand in den zweiten Betriebszustand schaltbar sind,
wobei die erste und die zweite Antriebswelle (11, 12) im zweiten Betriebszustand elektrisch derart miteinander gekoppelt sind, dass eine Energieübergabe von dem zumindest einen Generator (4) der einen Antriebswelle (11, 12) zu dem zumindest einen Antriebsmotor (5) der anderen Antriebswelle (11, 12) erfolgen kann,mit einer dritten elektrischen Antriebswelle (13) zum Antrieb einer weiteren Vortriebseinheit (2), insbesondere eines Waterjets, wobei die dritte Antriebswelle (13)
- zumindest einen von einer Verbrennungskraftmaschine (6) angetriebenen drehzahlveränderbaren Generator (4) zur Erzeugung einer Motorspannung mit variabler Amplitude und variabler Frequenz und
- zumindest einem mit dieser Motorspannung versorgten und mit der weiteren Vortriebseinheit (2) gekoppelten drehzahlveränderbaren Antriebsmotor (5) umfasst,
mit einem ersten weiteren Betriebszustand und einem zweiten weiteren Betriebszustand,
wobei im ersten weiteren Betriebszustand die erste und die dritte Antriebswelle (11, 13) elektrisch voneinander getrennt sind,
wobei im zweiten weiteren Betriebszustand die erste und die dritte Antriebswelle (11, 13) elektrisch miteinander gekoppelt sind,
wobei die erste und die dritte Antriebswelle (11, 13) vom ersten weiteren Betriebszustand in den zweiten weiteren Betriebszustand schaltbar sind,
wobei die erste und die dritte Antriebswelle (11, 13) im zweiten weiteren Betriebszustand elektrisch derart miteinander gekoppelt sind, dass eine Energieübergabe von dem zumindest einen Generator (4) der einen Antriebswelle (11, 13) zu dem zumindest einen Antriebsmotor (5) der anderen Antriebswelle (11, 13) erfolgen kann, **gekennzeichnet durch** einen Bordnetzumrichter (22), versorgt mit einem mit der Motorspannung mit variabler Amplitude und variabler Frequenz der zweiten Antriebswelle (12) versorgten ersten Bordnetzumrichter (22), der diese Spannung in eine Spannung mit konstanter Amplitude und konstanter Frequenz für ein erstes Teilbordnetz (20) umwandelt, und mit einem mit der Motorspannung mit variabler Amplitude und variabler Frequenz der dritten Antriebswelle (13) versorgten zweiten Bordnetzumrichter (22), der diese Spannung in eine Spannung mit konstanter Amplitude und konstanter Frequenz für ein zweites Teilbordnetz (20) umwandelt,
wobei die beiden Teilbordnetze (20) miteinander koppelbar sind,
wobei bei den Antriebswellen (11, 12, 13) jeweils ein Generator (4) und ein Antriebsmotor über einen Sammelleiter (7) miteinander elektrisch verbunden sind.

2. Schiffsantriebssystem (1) nach Anspruch 1, **dadurch gekennzeichnet, dass** der zumindest eine Generator (4) eine Supraleiter-Wicklung, insbesondere eine Hoch-Temperatur-Supraleiter (HTS)- Wicklung, aufweist.

3. Schiffsantriebssystem (1) nach Anspruch 1 oder 2, **dadurch gekennzeichnet, dass** der zumindest eine Antriebsmotor (5) eine Supraleiter-Wicklung, insbesondere eine Hoch-Temperatur-Supraleiter (HTS)- Wicklung, aufweist.

4. Schiffsantriebssystem (1) nach Anspruch 3, **dadurch gekennzeichnet, dass** die Supraleiter-Wicklung eine rotierende Läuferwicklung ist.

5. Schiffsantriebssystem (1) nach einem der vorhergehenden Ansprüche, **dadurch gekennzeichnet, dass** die Kopplung der Antriebswellen (11, 12 bzw. 11. 13) durch eine elektrische Leitungsverbindung (14, 15) erfolgt, die vorzugsweise einen Supraleiter, insbesondere einen Hoch-Temperatur-Supraleiter (HTS) umfasst.

6. Schiffsantriebssystem (1) nach einem der Ansprüche 2 bis 5, **dadurch gekennzeichnet, dass** die zweite und die dritte Antriebswelle (12, 13) als Hauptantrieb für einen unteren Geschwindigkeitsbereich des Schiffes und die erste Antriebswelle (11) alleine oder im Verbund mit der zweiten und der dritten Antriebswelle (12, 13) als Hauptantrieb für einen höheren Geschwindigkeitsbereich bis zur Höchstgeschwindigkeit des Schiffes dienen.

7. Schiffsantriebssystem (1) nach Anspruch 6, **dadurch gekennzeichnet, dass** die Verbrennungskraftmaschine der ersten Antriebswelle (11) als eine Gasturbine (6) und die Verbrennungskraftmaschinen der zweiten und der dritten Antriebswelle (11, 12) als Dieselmotoren (6) ausgebildet sind.

8. Schiffsantriebssystem (1) nach einem der vorhergehenden Ansprüche, **gekennzeichnet durch** einen mit der Motorspannung mit variabler Amplitude und variabler Frequenz einer der Antriebswellen (12, 13) versorgten Bordnetzumrichter (22), der diese Spannung in eine Spannung mit konstanter Amplitude und konstanter Frequenz für ein Bordnetz umwandelt.

9. Schiffsantriebssystem (1) nach Anspruch 8, **gekennzeichnet durch** zumindest einen zusätzlichen Bordnetzgenerator (25) zur Versorgung des Bordnetzes oder eines der Teilbordnetze (20) mit einer Spannung mit konstanter Amplitude und konstanter Frequenz.

10. Schiffsantriebssystem (1) nach Anspruch 8 oder 9, **dadurch gekennzeichnet, dass** der zumindest eine Generator (4) der Antriebswelle (11, 12, 13) von der ihn antreibenden Verbrennungskraftmaschine (3, 6) wahlweise mit einer festen oder mit einer variablen Frequenz antreibbar ist.

11. Schiffsantriebssystem (1, 30) nach einem der Ansprüche 9 bis 10, **dadurch gekennzeichnet, dass** die Antriebswelle (12, 13) von einem Betriebszustand, bei dem der zumindest eine Generator (4) der Antriebswelle (12, 13) ohne eine Zwischenschaltung des Bordnetzumrichters (22) elektrisch mit dem zumindest einen Antriebsmotor (5) der Antriebswelle (12, 13) gekoppelt ist und eine Spannung variabler Amplitude und Frequenz erzeugt, in einen Betriebszustand schaltbar ist, bei dem der zumindest eine Generator (4) der Antriebswelle (12, 13) über den Bordnetzumrichter (22) mit dem zumindest einen Antriebsmotor (5) der Antriebswelle (12, 13) elektrisch gekoppelt ist, wobei der Bordnetzumrichter (22) eine Spannung variabler Amplitude und Frequenz erzeugt.

12. Schiffsantriebssystem (1, 30) nach einem der Ansprüche 8 bis 11, **dadurch gekennzeichnet, dass** die Antriebswelle (12, 13) von einem Betriebszustand, bei dem der zumindest eine Generator (4) der Antriebswelle (12, 13) ohne eine Zwischenschaltung des Bordnetzumrichters (22) elektrisch mit dem zumindest einen Antriebsmotor (5) der Antriebswelle (12, 13) gekoppelt ist und eine Spannung variabler Amplitude und Frequenz erzeugt, in einen Betriebszustand schaltbar ist, bei dem das Bordnetz oder Teilbordnetz (20) über den Bordnetzumrichter (22) mit dem zumindest einen Antriebsmotor (5) der Antriebswelle (12, 13) elektrisch gekoppelt ist, wobei der Bordnetzumrichter (22) eine Spannung variabler Amplitude und Frequenz erzeugt.

13. Verwendung des Schiffsantriebssystem (1) nach einem der vorhergehenden Ansprüche in einem Mehrhüllen-Schiff, insbesondere in einem Trimaran.

14. Verfahren zum Betrieb eines Schiffsantriebssystems (1) mit zumindest einer ersten und einer zweiten elektrischen Antriebswelle (11, 12) zum Antrieb jeweils einer Vortriebseinheit (2), insbesondere eines Waterjets, wobei jede der elektrischen Antriebswellen (11, 12)
- zumindest einen von einer Verbrennungskraftmaschine (3, 6) angetriebenen drehzahlveränderbaren Generator (4) zur Erzeugung einer Motorspannung mit variabler Amplitude und variabler Frequenz und
- zumindest einen mit dieser Motorspannung versorgten und mit einer Vortriebseinheit (2) gekoppelten drehzahlveränderbaren Antriebsmotor (5) umfasst,
mit einem ersten Betriebszustand und einem zweiten Betriebszustand,
wobei für den ersten Betriebszustand die erste und die zweite Antriebswelle (11, 12) elektrisch voneinander getrennt werden,
wobei für den zweiten Betriebszustand die erste und die zweite Antriebswelle (11, 12) elektrisch miteinander gekoppelt werden,
wobei die erste und die zweite Antriebswelle (11, 12) vom ersten Betriebszustand in den zweiten Betriebszustand geschaltet werden,
wobei die erste und die zweite Antriebswelle (11, 12) im zweiten Betriebszustand elektrisch derart miteinander gekoppelt sind, dass eine Energieübergabe von dem zumindest einen Generator (4) der einen Antriebswelle (11, 12) zu dem zumindest einen Antriebsmotor (5) der anderen Antriebswelle (11, 12) erfolgt, mit einer dritten elektrischen Antriebswelle (13) zum Antrieb einer weiteren Vortriebseinheit (2), insbesondere eines Waterjets, wobei die dritte Antriebswelle (13)
- zumindest einen von einer Verbrennungskraftmaschine (6) angetriebenen drehzahlveränderbaren Generator (4) zur Erzeugung einer Motorspannung mit variabler Amplitude und variabler Frequenz und
- zumindest einem mit dieser Motorspannung versorgten und mit der weiteren Vortriebseinheit (2) gekoppelten drehzahlveränderbaren Antriebsmotor (5) umfasst,
mit einem ersten weiteren Betriebszustand und einem zweiten weiteren Betriebszustand,
wobei für den ersten weiteren Betriebszustand die erste und die dritte Antriebswelle (11, 13) elektrisch voneinander getrennt werden,
wobei für den zweiten weiteren Betriebszustand die erste und die dritte Antriebswelle (11, 13) elektrisch miteinander gekoppelt werden,
wobei die erste und die dritte Antriebswelle (11, 13) vom ersten weiteren Betriebszustand in den zweiten weiteren Betriebszustand schaltbar sind,
wobei die erste und die dritte Antriebswelle (11, 13) im zweiten weiteren Betriebszustand elektrisch derart miteinander gekoppelt sind, dass eine Energieübergabe von dem zumindest einen Generator (4) der einen Antriebswelle (11, 13) zu dem zumindest einen Antriebsmotor (5) der anderen Antriebswelle (11, 13) erfolgt, **gekennzeichnet durch** einen mit der Motorspannung mit variabler Amplitude und variabler Frequenz der zweiten Antriebswelle (12) versorgten ersten Bordnetzumrichter (22), der diese Spannung in eine Spannung mit konstanter Amplitude und konstanter Frequenz für ein erstes Teilbordnetz (20) umwandelt, und mit einem mit der Motorspannung mit variabler Amplitude und variabler Frequenz der dritten Antriebswelle (13) versorgten zweiten Bordnetzumrichter (22), der diese Spannung in eine Spannung mit konstanter Amplitude und konstanter Frequenz für ein zweites Teilbordnetz (20) umwandelt,
wobei die beiden Teilbordnetze (20) miteinander gekoppelt werden,
wobei bei den Antriebswellen (11, 12, 13) jeweils ein Generator (4) und ein Antriebsmotor über einen Sammelleiter (7) miteinander elektrisch verbunden sind.

15. Verfahren nach Anspruch 14, **dadurch gekennzeichnet, dass** in zumindest einem Generator (4) eine Supraleiter-Wicklung, insbesondere eine Hoch-Temperatur-Supraleiter (HTS)- Wicklung, verwendet wird.

16. Verfahren nach einem der Ansprüche 14 bis 15, **dadurch gekennzeichnet, dass** in zumindest einem Antriebsmotor (5) eine Supraleiter-Wicklung, insbesondere eine Hoch-Temperatur-Supraleiter (HTS)- Wicklung, verwendet wird.

17. Verfahren nach Anspruch 16, **dadurch gekennzeichnet, dass** als Supraleiter-Wicklung eine rotierende Läuferwicklung verwendet wird.

18. Verfahren nach einem der Ansprüche 14 bis 17, **dadurch gekennzeichnet, dass** die Kopplung der Antriebswellen (11, 12 bzw. 11. 13) durch eine elektrische Leitungsverbindung (14, 15) erfolgt, die vorzugsweise einen Supraleiter, insbesondere einen Hoch-Temperatur-Supraleiter (HTS) umfasst.

19. Verfahren nach einem der Ansprüche 14 bis 18, **dadurch gekennzeichnet, dass** die zweite und die dritte Antriebswelle (12, 13) als Hauptantrieb für einen unteren Geschwindigkeitsbereich des Schiffes und die erste Antriebswelle (11) alleine oder im Verbund mit der zweiten und der dritten Antriebswelle (12, 13) als Hauptantrieb für einen höheren Geschwindigkeitsbereich bis zur Höchstgeschwindigkeit des Schiffes dienen.

20. Verfahren nach Anspruch 19, **dadurch gekennzeichnet, dass** als Verbrennungskraftmaschine der ersten Antriebswelle (11) eine Gasturbine (6) und als Verbrennungskraftmaschinen der zweiten und der dritten Antriebswelle (11, 12) Dieselmotoren (6) verwendet werden.

21. Verfahren nach einem der Ansprüche 14 bis 20, **gekennzeichnet durch** einen mit der Motorspannung mit variabler Amplitude und variabler Frequenz einer der Antriebswellen (12, 13) versorgten Bordnetzumrichter (22), der diese Spannung in eine Spannung mit konstanter Amplitude und konstanter Frequenz für ein Bordnetz umwandelt.

22. Verfahren nach Anspruch 21, mit zumindest einem zusätzlichen Bordnetzgenerator (25), der zur Versorgung des Bordnetzes oder eines der Teilbordnetze (20) mit einer Spannung mit konstanter Amplitude und konstanter Frequenz verwendet wird.

23. Verfahren nach einem der Ansprüche 21 bis 22, **dadurch gekennzeichnet, dass** der zumindest eine Generator (4) der Antriebswelle (11, 12, 13) von der ihn antreibenden Verbrennungskraftmaschine (3, 6) wahlweise mit einer festen oder mit einer variablen Frequenz angetrieben wird.

24. Verfahren nach einem der Ansprüche 21 bis 23, **dadurch gekennzeichnet, dass** die Antriebswelle (12, 13) von einem Betriebszustand, bei dem der zumindest eine Generator (4) der Antriebswelle (12, 13) ohne eine Zwischenschaltung des Bordnetzumrichters (22) elektrisch mit dem zumindest einen Antriebsmotor (5) der Antriebswelle (12, 13) gekoppelt ist und eine Spannung variabler Amplitude und Frequenz erzeugt, in einen Betriebszustand geschaltet wird, bei dem der zumindest eine Generator (4) der Antriebswelle (12, 13) über den Bordnetzumrichter (22) mit dem zumindest einen Antriebsmotor (5) der Antriebswelle (12, 13) elektrisch gekoppelt ist, wobei der Bordnetzumrichter (22) eine Spannung variabler Amplitude und Frequenz erzeugt.

25. Verfahren nach einem der Ansprüche 21 bis 24, **dadurch gekennzeichnet, dass** die Antriebswelle (12, 13) von einem Betriebszustand, bei dem der zumindest eine Generator (4) der Antriebswelle (12, 13) ohne eine Zwischenschaltung des Bordnetzumrichters (22) elektrisch mit dem zumindest einen Antriebsmotor (5) der Antriebswelle (12, 13) gekoppelt ist und eine Spannung variabler Amplitude und Frequenz erzeugt, in einen Betriebszustand geschaltet wird, bei dem das Bordnetz oder Teilbordnetz (20) über den Bordnetzumrichter (22) mit dem zumindest einen Antriebsmotor (5) der Antriebswelle (12, 13) elektrisch gekoppelt ist, wobei der Bordnetzumrichter (22) eine Spannung variabler Amplitude und Frequenz erzeugt.

## Claims

1. Ship drive system (1) having at least a first and a second electric drive shaft (11, 12), each of which is provided for driving a propulsion unit (2), in particular a waterjet, wherein each of the electric drive shafts (11, 12) comprises
- at least one speed-variable generator (4) driven by an internal combustion engine (3, 6) for generating a motor voltage having variable amplitude and variable frequency, and
- at least one speed-variable drive motor (5) supplied with said motor voltage and coupled to a propulsion unit (2), having a first operating state and a second operating state,
wherein in the first operating state the first and the second drive shaft (11, 12) are separated electrically from one another,
wherein in the second operating state the first and the second drive shaft (11, 12) are coupled electrically to one another,
wherein the first and the second drive shaft (11, 12) can be switched from the first operating state into the second operating state,
wherein in the second operating state the first and the second drive shaft (11, 12) are coupled electrically to each other in such a way that a transfer of energy can take place from the at least one generator (4) of one drive shaft (11, 12) to the at least one drive motor (5) of the other drive shaft (11, 12), having a third electrical drive shaft (13) for driving a further propulsion unit (2), in particular a waterjet, wherein the third drive shaft (13) comprises
- at least one speed-variable generator (4) driven by an internal combustion engine (6) for generating a motor voltage having variable amplitude and variable frequency, and
- at least one speed-variable drive motor (5) supplied with said motor voltage and coupled to the further propulsion unit (2),
with a first further operating state and a second further operating state,
wherein in the first further operating state the first and the third drive shaft (11, 13) are separated electrically from one another,
wherein in the second further operating state the first and the third drive shaft (11, 13) are coupled electrically to one another,
wherein the first and the third drive shaft (11, 13) can be switched from the first further operating state into the second further operating state,
wherein in the second further operating state the first and the third drive shaft (11, 13) are coupled electrically to each other in such a way that a transfer of energy can take place from the at least one generator (4) of one drive shaft (11, 13) to the at least one drive motor (5) of the other drive shaft (11, 13),
**characterised by** an onboard power network converter (22), supplied with a first onboard power network converter (22) supplied with the motor voltage having variable amplitude and variable frequency of the second drive shaft (12) which converts this voltage into a voltage having constant amplitude and constant frequency for a first onboard power subnetwork (20) and with a second electrical onboard power network converter (22) supplied with the motor voltage having variable amplitude and variable frequency of the third drive shaft (13) which converts this voltage into a voltage having constant amplitude and constant frequency for a second onboard power subnetwork (20),
wherein the two onboard power subnetworks (20) can be coupled to one another,
wherein with the drive shafts (11, 12, 13) in each case a generator (4) and a drive motor are connected electrically to one another by way of a bus bar (7).

2. Ship drive system (1) according to claim 1, **characterised in that** the at least one generator (4) has a superconductor winding, in particular a high-temperature superconductor (HTS) winding.

3. Ship drive system (1) according to claim 1 or 2, **characterised in that** the at least one drive motor (5) has a superconductor winding, in particular a high-temperature superconductor (HTS) winding.

4. Ship drive system (1) according to claim 3, **characterised in that** the superconductor winding is a rotating rotor winding.

5. Ship drive system (1) according to one of the preceding claims, **characterised in that** the drive shafts (11, 12 or 11, 13) are coupled by means of an electric line connection (14, 15) which preferably comprises a superconductor, in particular a high-temperature superconductor (HTS).

6. Ship drive system (1) according to one of claims 2 to 5, **characterised in that** the second and the third drive shaft (12, 13) serve as the main drive for a lower speed range of the vessel and the first drive shaft (11) on its own or in combination with the second and the third drive shaft (12, 13) serves as the main drive for a higher speed range up to the maximum speed of the vessel.

7. Ship drive system (1) according to claim 6, **characterised in that** the internal combustion engine of the first drive shaft (11) is embodied as a gas turbine (6) and the internal combustion engines of the second and the third drive shaft (11, 12) are embodied as diesel engines (6).

8. Ship drive system (1) according to one of the preceding claims, **characterised by** an electrical onboard power network converter (22) which is supplied with the motor voltage having variable amplitude and variable frequency of one of the drive shafts (12, 13) and which converts said voltage into a voltage having constant amplitude and constant frequency for an electrical onboard power network.

9. Ship drive system (1) according to claim 8, **characterised by** at least one additional electrical onboard power network generator (25) for supplying the electrical onboard power network or one of the electrical onboard power subnetworks (20) with a voltage having constant amplitude and constant frequency.

10. Ship drive system (1) according to claim 8 or 9, **characterised in that** the at least one generator (4) of the drive shaft (11, 12, 13) can be driven by the internal combustion engine (3, 6) driving it optionally at a fixed or at a variable frequency.

11. Ship drive system (1, 30) according to one of claims 9 to 10, **characterised in that** the drive shaft (12, 13) can be switched from an operating state in which the at least one generator (4) of the drive shaft (12, 13) is coupled electrically to the at least one drive motor (5) of the drive shaft (12, 13) without the electrical onboard power network converter (22) being interposed therebetween and generates a voltage having variable amplitude and frequency, to an operating state in which the at least one generator (4) of the drive shaft (12, 13) is coupled electrically to the at least one drive motor (5) of the drive shaft (12, 13) by way of the electrical onboard power network converter (22), the electrical onboard power network converter (22) generating a voltage having variable amplitude and frequency.

12. Ship drive system (1, 30) according to one of claims 8 to 11, **characterised in that** the drive shaft (12, 13) can be switched from an operating state in which the at least one generator (4) of the drive shaft (12, 13) is coupled electrically to the at least one drive motor (5) of the drive shaft (12, 13) without the electrical onboard power network converter (22) being interposed therebetween and generates a voltage having variable amplitude and frequency, to an operating state in which the electrical onboard power network or electrical onboard power subnetwork (20) is coupled electrically to the at least one drive motor (5) of the drive shaft (12, 13) by way of the electrical onboard power network converter (22), the electrical onboard power network converter (22) generating a voltage having variable amplitude and frequency.

13. Application of the ship drive system (1) according to one of the preceding claims in a multihulled vessel, in particular in a trimaran.

14. Method for operating a ship drive system (1) with at least one first and one second electrical drive shaft (11, 12) for driving in each case a propulsion unit (2), in particular a waterjet, wherein each of the electrical drive shafts (11, 12) comprises
- at least one speed-variable generator (4) driven by an internal combustion engine (3, 6) for generating a motor voltage having variable amplitude and variable frequency, and
- at least one speed-variable drive motor (5) supplied with said motor voltage and coupled to a propulsion unit (2), having a first operating state and a second operating state,
wherein in the first operating state the first and the second drive shaft (11, 12) are separated electrically from one another,
wherein in the second operating state, the first and the second drive shaft (11, 12) are coupled electrically to one another,
wherein the first and the second drive shaft (11, 12) are switched from the first operating state into the second operating state,
wherein in the second operating state the first and the second drive shaft (11, 12) are coupled electrically to each other in such a way that a transfer of energy can take place from the at least one generator (4) of one drive shaft (11, 12) to the at least one drive motor (5) of the other drive shaft (11, 12), having a third electrical drive shaft (13) for driving a further propulsion unit (2), in particular a waterjet, wherein the third drive shaft (13) comprises
- at least one speed-variable generator (4) driven by an internal combustion engine (6) for generating a motor voltage having variable amplitude and variable frequency, and
- at least one speed-variable drive motor (5) supplied with said motor voltage and coupled to the further propulsion unit (2),
with a first further operating state and a second further operating state,
wherein in the first further operating state the first and the third drive shaft (11, 13) are separated electrically from one another,
wherein in the second further operating state the first and the third drive shaft (11, 13) are coupled electrically to one another,
wherein the first and the third drive shaft (11, 13) can be switched from the first further operating state into the second further operating state,
wherein in the second further operating state the first and the third drive shaft (11, 13) are coupled electrically to each other in such a way that a transfer of energy takes place from the at least one generator (4) of one drive shaft (11, 13) to the at least one drive motor (5) of the other drive shaft (11, 13),
**characterised by** a
first electrical onboard power network converter (22), supplied with the motor voltage having variable amplitude and variable frequency of the second drive shaft (12), which converts this voltage into a voltage having a constant amplitude and constant frequency for a first onboard power subnetwork (20) and with a second electrical onboard power network converter (22) supplied with the motor voltage having a variable amplitude and variable frequency of the third drive shaft (13), which converts this voltage into a voltage with a constant amplitude and constant frequency for a second onboard power subnetwork (20),
wherein the two onboard power subnetworks (20) are coupled to one another,
wherein with the drive shafts (11, 12, 13) in each case a generator (4) and a drive motor are connected electrically to one another by way of a bus bar (7).

15. Method according to claim 14, **characterised in that** a superconductor winding, in particular a high-temperature superconductor (HTS) winding is used in at least one generator (4).

16. Method according to one of claims 14 to 15, **characterised in that** a superconductor winding, in particular a high-temperature superconductor (HTS) winding is used in at least one drive motor (5).

17. Method according to claim 16, **characterised in that** a rotating rotor winding is used as a superconductor winding.

18. Method according to one of claims 14 to 17, **characterised in that** the drive shafts (11, 12, or 11, 13) are coupled by an electrical line connection (14, 15), which preferably comprises a superconductor, in particular a high-temperature superconductor (HTS).

19. Method according to one of claims 14 to 18, **characterised in that** the second and the third drive shaft (12, 13) serve as the main drive for a lower speed range of the vessel and the first drive shaft (11) on its own or in combination with the second and the third drive shaft (12, 13) serves as the main drive for a higher speed range up to the maximum speed of the vessel.

20. Method according to claim 19, **characterised in that** the internal combustion engine of the first drive shaft (11) is embodied as a gas turbine (6) and the internal combustion engines of the second and the third drive shaft (11, 12) are embodied as diesel engines (6).

21. Method according to one of claims 14 to 20, **characterised by** an electrical onboard power network converter (22) supplied with the motor voltage having variable amplitude and variable frequency of one of the drive shafts (12, 13), which converts this voltage into a voltage having constant amplitude and constant frequency for an onboard power subnetwork.

22. Method according to claim 21, with at least one additional electrical onboard power network generator (25) which is used to supply the electrical onboard power network or one of the electrical onboard power subnetworks (20) with a voltage having constant amplitude and constant frequency.

23. Method according to one of claims 21 to 22, **characterised in that** the at least one generator (4) of the drive shaft (11, 12, 13) is driven by the internal combustion engine (3, 6) driving it optionally at a fixed or at a variable frequency.

24. Method according to one of claims 21 to 23, **characterised in that** the drive shaft (12, 13) is switched from an operating state in which the at least one generator (4) of the drive shaft (12, 13) is coupled electrically to the at least one drive motor (5) of the drive shaft (12, 13) without the electrical onboard power network converter (22) being interposed therebetween and generates a voltage having variable amplitude and frequency, to an operating state in which the at least one generator (4) of the drive shaft (12, 13) is coupled electrically to the at least one drive motor (5) of the drive shaft (12, 13) by way of the electrical onboard power network converter (22), the electrical onboard power network converter (22) generating a voltage having variable amplitude and frequency.

25. Method according to one of claims 21 to 24, **characterised in that** the drive shaft (12, 13) is switched from an operating state in which the at least one generator (4) of the drive shaft (12, 13) is coupled electrically to the at least one drive motor (5) of the drive shaft (12, 13) without the electrical onboard power network converter (22) being interposed therebetween and generates a voltage having variable amplitude and frequency, to an operating state in which the electrical onboard power network or electrical onboard power subnetwork (20) is coupled electrically to the at least one drive motor (5) of the drive shaft (12, 13) by way of the electrical onboard power network converter (22), the electrical onboard power network converter (22) generating a voltage of variable amplitude and frequency.

## Revendications

1. Système de propulsion de bateau, comprenant au moins un premier et un deuxième arbres (11, 12) d'entraînement électrique pour l'entraînement, respectivement, d'une unité (2) de propulsion, notamment d'un waterjet, dans lequel chacun des arbres (11, 12) d'entraînement électriques comprend
- au moins un générateur (4) à vitesse de rotation variable entraîné par une machine (3, 6) à combustion interne pour produire une tension de moteur d'amplitude variable et de fréquence variable et
- au moins un moteur (5) d'entraînement à vitesse de rotation variable, alimenté par cette tension de moteur et couplé à une unité (2) de propulsion,
ayant un premier état de fonctionnement et un deuxième état de fonctionnement,
dans lequel, dans le premier état de fonctionnement, le premier et le deuxième arbres (11, 12) d'entraînement sont séparés électriquement l'un de l'autre,
dans lequel dans le deuxième état de fonctionnement, le premier et le deuxième arbres (11, 12) d'entraînement sont connectés électriquement l'un à l'autre,
dans lequel le premier et le deuxième arbres (11, 12) d'entraînement peuvent passer du premier état de fonctionnement au deuxième état de fonctionnement,
dans lequel le premier et le deuxième arbres (11, 12) d'entraînement sont, dans le deuxième état de fonctionnement, connectés l'un à l'autre de manière à pouvoir effectuer un transfert d'énergie d'au moins un générateur (4) de l'un des arbres (11, 12) d'entraînement à au moins un moteur (5) d'entraînement de l'autre arbre (11, 12) d'entraînement, comprenant un troisième arbre (13) d'entraînement électrique pour entraîner une autre unité (2) de propulsion, notamment un waterjet, le troisième arbre (13) d'entraînement comprenant
- au moins un générateur (4) à vitesse de rotation variable, entraîné par une machine (6) à combustion interne pour produire une tension de moteur d'amplitude et de fréquence variable et
- au moins un moteur (5) d'entraînement à vitesse de rotation variable, alimenté par cette tension de moteur et couplé à l'autre unité (2) de propulsion,
ayant un autre premier état de fonctionnement et un autre deuxième état de fonctionnement,
dans lequel, dans l'autre premier état de fonctionnement, le premier et le troisième arbres (11, 13) d'entraînement sont séparés électriquement l'un de l'autre,
dans lequel, dans l'autre deuxième état de fonctionnement, le premier et le troisième arbres (11, 13) d'entraînement sont connectés électriquement l'un à l'autre,
dans lequel le premier et le troisième arbres (11, 13) d'entraînement peuvent passer de l'autre premier état de fonctionnement à l'autre deuxième état de fonctionnement,
dans lequel le premier et le troisième arbres (11, 13) d'entraînement sont, dans l'autre deuxième état de fonctionnement, connectés électriquement l'un à l'autre, de manière à pouvoir effectuer un transfert d'énergie d'au moins un générateur (4) de l'un des arbres (11, 13) d'entraînement à au moins un moteur (5) d'entraînement de l'autre des arbres (11, 13) d'entraînement, **caractérisé par**
un premier convertisseur (22) de réseau de bord, alimenté en la tension de moteur d'amplitude variable et de fréquence variable du deuxième arbre (12) d'entraînement et transformant cette tension en une tension d'amplitude constante et de fréquence constante pour un premier réseau de bord (20) partiel, et comprenant un deuxième convertisseur (22) de réseau de bord, alimenté en la tension de moteur d'amplitude variable et de fréquence variable du troisième arbre d'entraînement et transformant cette tension en une tension d'amplitude constante et de fréquence constante pour un deuxième réseau de bord (20) partiel,
les deux réseaux de bord (20) partiels pouvant être connectés l'un à l'autre,
dans lequel, pour les arbres (11, 12, 13) d'entraînement, respectivement, un générateur (4) et un moteur d'entraînement sont connectés électriquement entre eux par un conducteur (7) collecteur.

2. Système de propulsion de bateau suivant la revendication 1, **caractérisé en ce que** le au moins un générateur a un enroulement supraconducteur, notamment un enroulement supraconducteur à haute température (HTS).

3. Système de propulsion de bateau suivant la revendication 1 ou 2, **caractérisé en ce que** le au moins un moteur (5) d'entraînement a un enroulement supraconducteur, notamment un enroulement supraconducteur à haute température (HTS).

4. Système de propulsion de bateau suivant la revendication 3, **caractérisé en ce que** l'enroulement supraconducteur est un enroulement de rotor tournant.

5. Système de propulsion de bateau suivant l'une des revendications précédentes, **caractérisé en ce que** la connexiion des arbres (12, 12 ou 11, 13) d'entraînement s'effectue par une liaison (14, 15) par ligne électrique, qui comprend, de préférence, un supraconducteur, notamment un supraconducteur à haute température (HTS).

6. Système de propulsion de bateau suivant l'une des revendications 2 à 5, **caractérisé en ce que** le deuxième et le troisième arbre (12, 13) d'entraînement servant d'entraînement principal pour une plage de vitesse inférieure du bateau et le premier arbre (11) d'entraînement, seul ou en liaison avec le deuxième et le troisième arbres (12, 13) d'entraînement, sert d'entraînement principal pour une plage de vitesse plus grande jusqu'à la vitesse la plus grande du bateau.

7. Système de propulsion de bateau suivant la revendication 6, **caractérisé en ce que** la machine à combustion interne du premier arbre (11) d'entraînement est constituée sous la forme d'une turbine (6) à gaz et les machines à combustion internes du deuxième et du troisième arbres (11, 12) d'entraînement sous la forme de moteurs (6) diesel.

8. Système de propulsion de bateau suivant l'une des revendications précédentes, **caractérisé par** un convertisseur (22) de réseau de bord, alimenté en la tension de moteur d'amplitude variable et de fréquence variable de l'un des arbres (12, 13) d'entraînement et transformant cette tension en une tension d'amplitude constante et de fréquence constante pour un réseau de bord.

9. Système de propulsion de bateau suivant la revendication 8, **caractérisé par** au moins un générateur (25) supplémentaire de réseau de bord pour l'alimentation du réseau de bord ou de l'un d'un réseau de bord (20) partiel en une tension d'amplitude constante et de fréquence constante.

10. Système de propulsion de bateau suivant la revendication 8 ou 9 **caractérisé en ce que** le au moins un générateur (4) de l'arbre (11, 12, 13) d'entraînement est entrainé par la machine (3, 6) à combustion interne qui l'entraîne, au choix à une fréquence fixe ou à une fréquence variable.

11. Système (1, 30) de propulsion de bateau suivant l'une des revendications 9 à 10, **caractérisé en ce que** l'arbre (12, 13) d'entraînement peut passer d'un état de fonctionnement, dans lequel le au moins un générateur (4) de l'arbre (12, 13) d'entraînement est connecté électriquement, sans montage intermédiaire du convertisseur (22) de réseau de bord, au au moins un moteur (5) d'entraînement de l'arbre (12, 13) d'entraînement et produit une tension d'amplitude et de fréquence variable, à un état de fonctionnement, dans lequel le au moins un générateur (4) de l'arbre (12, 13) d'entraînement est connecté électriquement, par le convertisseur (22) de réseau de bord, au au moins un moteur (5) d'entraînement de l'arbre (12, 13) d'entraînement, le convertisseur (22) de réseau de bord produisant une tension d'amplitude et de fréquence variable.

12. Système (1, 30) de propulsion de bateau suivant l'une des revendications 8 à 11, **caractérisé en ce que** l'arbre (12, 13) d'entraînement peut passer d'un état de fonctionnement, dans lequel le au moins un générateur (4) de l'arbre (12, 13) d'entraînement est connecté électriquement, sans montage intermédiaire du convertisseur (22) de réseau de bord, au au moins un moteur (5) d'entraînement de l'arbre (12, 13) d'entraînement et produit une tension d'amplitude et de fréquence variable, à un état de fonctionnement, dans lequel le réseau de bord ou le réseau de bord (20) partiel est connecté électriquement par le convertisseur (22) de réseau de bord au au moins un moteur (5) d'entraînement de l'arbre (12) d'entraînement, le convertisseur (22) de réseau de bord produisant une tension d'amplitude et de fréquence variable.

13. Utilisation du système (1) d'entraînement de bateau suivant l'une des revendications précédentes, dans un bateau multicoques, notamment dans un trimaran.

14. Procédé pour faire fonctionner un système (1) d'entraînement de bateau, comprenant au moins un premier et un deuxième arbres (11, 12) d'entraînement électrique pour l'entraînement, respectivement, d'une unité (2) de propulsion, notamment d'un waterjet, dans lequel chacun des arbres (11, 12) d'entraînement électrique comprend
- au moins un générateur (4) à vitesse de rotation variable entraîné par une machine (3, 6) à combustion interne pour produire une tension de moteur d'amplitude variable et de fréquence variable et
- au moins un moteur (5) d'entraînement à vitesse de rotation variable, alimenté par cette tension de moteur et couplé à une unité (2) de propulsion,
ayant un premier état de fonctionnement et un deuxième état de fonctionnement,
dans lequel, pour le premier état de fonctionnement, on sépare électriquement l'un de l'autre le premier et le deuxième arbres (11, 12) d'entraînement,
dans lequel, pour le deuxième état de fonctionnement, on connecte électriquement l'un à l'autre le premier et le deuxième arbres (11, 12) d'entraînement,
dans lequel on fait passer le premier et le deuxième arbre (11, 12) d'entraînement du premier état de fonctionnement au deuxième état de fonctionnement,
dans lequel le premier et le deuxième arbres (11, 12) d'entraînement sont connectés électriquement l'un à l'autre dans le deuxième état de fonctionnement, de manière à effectuer un transfert d'énergie du au moins un générateur (4) de l'un des arbres (11, 12) d'entraînement au moins un moteur (5) d'entraînement de l'autre arbre (11, 12) d'entraînement, comprenant un troisième arbre (13) d'entraînement électrique pour l'entraînement d'une autre unité (2) de propulsion, notamment d'un waterjet, le troisième arbre (13) d'entraînement comprenant
- au moins un générateur (4) à vitesse de rotation variable, entraîné par une machine (6) à combustion interne pour produire une tension de moteur d'amplitude et de fréquence variable et
- au moins un moteur (5) d'entraînement à vitesse de rotation variable, alimenté par cette tension de moteur et couplé à l'autre unité (2) de propulsion,
ayant un autre premier état de fonctionnement et un autre deuxième état de fonctionnement,
dans lequel on sépare électriquement l'un de l'autre le premier et le troisième arbres (11, 13) d'entraînement pour l'autre premier état de fonctionnement,
dans lequel on connecte électriquement l'un à l'autre le premier et le troisième arbres (11, 13) d'entraînement pour l'autre deuxième état de fonctionnement,
dans lequel on peut faire passer le premier et le troisième arbres (11, 13) d'entraînement de l'autre premier état de fonctionnement à l'autre deuxième état de fonctionnement,
dans lequel le premier et le troisième arbres (11, 13) d'entraînement sont connectés électriquement l'un à l'autre dans l'autre deuxième état de fonctionnement, de manière à effectuer un transfert d'énergie du au moins un générateur (4) de l'un des arbres (11, 13) d'entraînement au au moins un moteur (5) d'entraînement de l'autre arbre (11, 13) d'entraînement,
**caractérisé par**
un premier convertisseur (22) de réseau de bord, alimenté en la tension de moteur d'amplitude variable et de fréquence variable du deuxième arbre (12) d'entraînement et transformant cette tension en une tension d'amplitude constante et de fréquence constante pour un premier réseau de bord (20) partiel, et comprenant un deuxième convertisseur (22) de réseau de bord, alimenté en la tension de moteur d'amplitude variable et de fréquence variable du troisième arbre d'entraînement et transformant cette tension en une tension d'amplitude constante et de fréquence constante pour un deuxième réseau de bord (20) partiel,
dans lequel on couple ensemble les deux réseaux de bord (20) partiels,
dans lequel, pour les arbres (11, 12, 13) d'entraînement, respectivement, un générateur (4) et un moteur d'entraînement sont connectés électriquement entre eux par un conducteur (7) collecteur.

15. Procédé suivant la revendication 14, **caractérisé en ce que**, dans au moins un générateur (4), on utilise un enroulement supraconducteur, notamment un enroulement supraconducteur à haute température (HTS).

16. Procédé suivant l'une des revendications 14 à 15, **caractérisé en ce que**, dans au moins un moteur (5) d'entraînement, on utilise un enroulement supraconducteur, notamment un enroulement supraconducteur à haute température (HTS).

17. Procédé suivant la revendication 16, **caractérisé en ce que** l'on utilise, comme enroulement supraconducteur, un enroulement de rotor tournant.

18. Procédé suivant l'une des revendications 14 à 17, **caractérisé en ce que** le couplage des arbres (12, 12 ou 11, 13) d'entraînement s'effectue par une liaison (14, 15) par ligne électrique, qui comprend, de préférence, un supraconducteur, notamment un supraconducteur à haute température (HTS).

19. Procédé suivant l'une des revendications 14 à 18, **caractérisé en ce que** le deuxième et le troisième arbres (12, 13) d'entraînement servent d'entraînement principal pour une plage de vitesse inférieure du bateau et le premier arbre (11) d'entraînement, seul ou en liaison avec le deuxième et le troisième arbres (12, 13) d'entraînement, sert d'entraînement principal pour une plage de vitesse plus grande jusqu'à la vitesse la plus grande du bateau.

20. Procédé suivant la revendication 19, **caractérisé en ce que** l'on utilise, comme machine à combustion interne du premier arbre (11) d'entraînement, une turbine (6) à gaz et comme machine à combustion interne du deuxième et du troisième arbres (11, 12) d'entraînement des moteurs (6) diesel.

21. Procédé suivant l'une des revendications 14 à 20, **caractérisé par** un convertisseur (22) de réseau de bord, alimenté en la tension de moteur d'amplitude et de fréquence variable de l'un des arbres (12, 13) d'entraînement et transformant cette tension en une tension d'amplitude constante et de fréquence constante pour un réseau de bord.

22. Procédé suivant la revendication 21, comprenant au moins un générateur (25) supplémentaire de réseau de bord, que l'on utilise pour l'alimentation du réseau de bord ou de l'un d'un réseau de bord (20) partiel en une tension d'amplitude constante et de fréquence constante.

23. Procédé suivant l'une des revendications 21 à 22, **caractérisé en ce que** l'on entraîne, au choix, à une fréquence fixe ou à une fréquence variable au moins un générateur (4) de l'arbre (11, 12, 13) d'entraînement par la machine (3, 6) à combustion interne qui l'entraîne.

24. Procédé suivant l'une des revendications 21 à 23, **caractérisé en ce que** l'arbre (12, 13) d'entraînement peut passer d'un état de fonctionnement, dans lequel le au moins un générateur (4) de l'arbre (12, 13) d'entraînement est connecté électriquement, sans montage intermédiaire du convertisseur (22) de réseau de bord, au au moins un moteur (5) d'entraînement de l'arbre (12, 13) d'entraînement et produit une tension d'amplitude et de fréquence variable à un état de fonctionnement, dans lequel le au moins un générateur (4) de l'arbre (12, 13) d'entraînement est connecté électriquement, par le convertisseur (22) de réseau de bord, au au moins un moteur (5) d'entraînement de l'arbre (12, 13) d'entraînement, le convertisseur (22) de réseau de bord produisant une tension d'amplitude et de fréquence variable.

25. Procédé suivant l'une des revendications 21 à 24, **caractérisé en ce que** l'arbre (12, 13) d'entraînement peut passer d'un état de fonctionnement, dans lequel le au moins un générateur (4) de l'arbre (12, 13) d'entraînement est connecté électriquement, sans montage intermédiaire du convertisseur (22) de réseau de bord, au au moins un moteur (5) d'entraînement de l'arbre (12, 13) d'entraînement et produit une tension d'amplitude et de fréquence variable, à un état de fonctionnement, dans lequel le réseau de bord ou le réseau de bord (20) partiel est connecté électriquement, par le convertisseur (22) de réseau de bord au au moins un moteur (5) d'entraînement de l'arbre (12) d'entraînement, le convertisseur (22) de réseau de bord produisant une tension d'amplitude et de fréquence variable
